# EUROPEAN PATENT SPECIFICATION

(11) **EP 2 147 362 B1**
(45) Date of publication and mention of the grant of the patent: **14.12.2011**
(21) Application number: 08737862.6
(22) Date of filing: 15.04.2008
(51) Int. Cl.: G06F 1/32

(54) **ELECTRONIC DEVICE AND METHOD OF PERFORMING A POWER MANAGEMENT IN AN ELECTRONIC DEVICE**
ELEKTRONISCHE EINRICHTUNG UND VERFAHREN ZUM DURCHFÜHREN EINES POWERMANAGEMENT IN EINER ELEKTRONISCHEN EINRICHTUNG
DISPOSITIF ÉLECTRONIQUE ET PROCÉDÉ POUR Y RÉALISER LA GESTION DE L'ALIMENTATION

(30) Priority: 23.04.2007 EP 07106718
(43) Date of publication of application: 27.01.2010
(73) Proprietor: ST-Ericsson SA, 1228 Plan-les-Ouates (CH)
(72) Inventor: BURCHARD, Artur, T., NL-5656 AG Eindhoven (NL); MEIJER, Rinze, I., M., P., NL-5656 AG Eindhoven (NL)
(74) Representative: Bird, William Edward
(86) International application number: PCT/IB2008/051440
(87) International publication number: WO 2008/129461

(56) References cited:
- EP-A- 0 817 525
- WO-A-03/014902
- US-A1- 2003 085 621

## Description

### FIELD OF THE INVENTION

The present invention relates to an electronic device as well as to a method of performing a power management in an electronic device.

### BACKGROUND OF THE INVENTION

The ability to manage the power dissipation of electronic devices, in particular mobile devices driven by batteries, is becoming more and more important. By means of the power management, the power dissipation of mobile devices is managed in order to increase the running time of the device based on its available battery power. To perform an effective power management, the operating state of hardware blocks or functional units in the electronic device must be determined and the transition into a new operating state has to be controlled. The actual state of the hardware block or functional unit can be determined by observing the system behavior or the behavior of an application running on the system. The energy which is supplied to the electronic device can be controlled by means of dynamic frequency and voltage scaling DVFS, i.e. by controlling the supply voltage and/or the clock frequency. However, to control the energy delivered, any power management must be able to investigate and analyze the internal behavior of a system or its external communication. Thus, the power management has to be implemented in the system or device in the neighborhood of the required functionality, i.e. the power management must be implemented in the monitoring and analyzing infrastructure of a device or system. Hence, the requirements of such a system would be higher as the processor will have to nm at higher frequencies or some additional hardware infrastructure needs to be implemented.

The published International Patent Application WO 03/014 902 describes a power distribution management apparatus for supplying power to two or more loads including a power and clock distribution controller capable of determining voltage, current and clock signal frequency targets for the loads. The apparatus also includes two or more power sources responsive to the controller, so as to be selectively coupled with the loads to provide the target voltage and current to the loads. The power sources have switching frequencies of at least one megahertz. The apparatus further includes two or more clock signal sources responsive to the controller and coupled with the loads so as to provide clock signals to the loads at the target frequencies.

The published European Patent Application EP 817 525 describes a method and arrangement for optimal usage of switching resources and transmission resources of multimedia networks. The method involves monitoring the active or inactive condition of respective multimedia-communications terminals, and denoting that condition to a multimedia - communications network, to allow optimal use of exchange-related and transmission-related resources of the multimedia-communications networks to which the terminals are connected over multimedia-terminal connection units.

The published US Patent Application US 2003/085621 describes a power supply detecting power requirements of an electrical device and configuring itself to provide the correct power to the device. By using a connector that isolates the device from its battery, the power supply can provide power to the device, recharge the battery, recharge the battery while at the same time providing power to the device, or provide power to the device while preventing the battery from being recharged.

### SUMMARY OF THE INVENTION

It is therefore an object of the present invention to provide an electronic device as well as a method of performing a power management in an electronic device, which are able to perform a power management without adding a significant additional infrastructure to the electronic device.

This object is solved by an electronic device according to claim 1 as well as by a method for determining the workload of an electronic device according to claim 4.

Therefore, an electronic device is provided which comprises at least one functional unit for performing a processing. The functional unit receives a supply current. The electronic device furthermore comprises a supply current monitor for monitoring the supply current in order to determine an average supply current. The electronic device furthermore comprises a characterization unit for determining a relation between the average supply current and an operating frequency of the functional unit. Furthermore, a slope calculation unit is provided to determine the slope of the relation. Moreover, a power management unit is provided to control the operation of the functional unit according to the results of the slope calculation unit in order to control the power dissipation of the functional unit.

According to an aspect of the present invention, the electronic device furthermore comprises an optimal energy point calculation unit for determining whether the monitored average supply current relates to an operation of the functional block at an optimal energy point. The power management unit is adapted to control the operation of the functional block according to the results of the optimal energy point calculation unit.

The invention also relates to a method for performing a power management in an electronic device. A processing is performed by at least one functional unit. The functional unit receives a supply current. The supply current to the at least one functional unit is monitored to determine an average supply current. A relation between the average supply current and an operating frequency of the functional unit is determined. A slope of this relation is determined and a power management is performed for the operation of the functional unit according to the results of the slope calculation to control the power dissipation of the at least one functional unit.

The present invention relates to the idea to perform a power management of an electronic device or parts thereof by monitoring its supply lines. In particular, the supply current is monitored to determine the operating state of the electronic device or parts thereof. To determine the operating state of the electronic device or parts thereof, the supply current-frequency relation of the device or parts thereof is determined. The slope of the relation between the current-frequency is examined. This can for example be done by oscillating the execution frequency to measure the supply current. In addition or alternatively, the supply voltage can be oscillated to measure the supply current. Furthermore, an optimal energy operation point is determined, which could also be done by oscillating the clock frequency and/or the supply voltage. In other words, the average supply current needs to be monitored or measured. The measured supply current is analyzed to determine the operating state of the electronic device or parts thereof. It is furthermore determined whether the electronic device or parts thereof operate at an optimal energy point. This can be done as described above by oscillating the supply voltage and/or the clock frequency. A power management is performed according to the analysis of the supply current and/or whether the electronic device or parts thereof operate at an optimal energy point. The power management of the workload may include adding or removing functionality, and switching on or off of hardware.

A power management of a hardware block is preferably performed based on the supply current of the hardware block. It should be noted that the average supply current linearly depends on the working frequency (e.g. the clock frequency) of a hardware block, wherein the slope of the relationship is different for the various states of the hardware block. By measuring the average supply current of the hardware block, in particular by determining the slope of the average current-frequency function, the actual state of the hardware block can be determined. Based on the knowledge of the actual state of the hardware block, a power management can be performed during runtime by deciding whether to switch the hardware into a different power mode or not. As the average supply current is used as basic parameter for performing or deciding the power management, such a power management can be performed from the outside of the hardware block merely by monitoring the supply lines of the hardware block instead of analyzing its internal or external behavior.

Preferred embodiments of the invention are defined in the dependent claims.

### BRIEF DESCRIPTION OF THE DRAWINGS

These and other aspects of the invention will be apparent from and elucidated with reference to the embodiment(s) described hereinafter with reference to the drawings.
Fig. 1 shows a graph of a current-frequency relation of a processing unit according to the invention,
Fig. 2 shows a further graph of a current-frequency relation of a processing unit according to the invention,
Fig. 3 shows a further graph of the current-frequency relation of a processing unit according to the invention, and
Fig. 4 shows a block diagram of an electronic device according to the first embodiment.

### DETAILED DESCRIPTION OF EMBODIMENTS

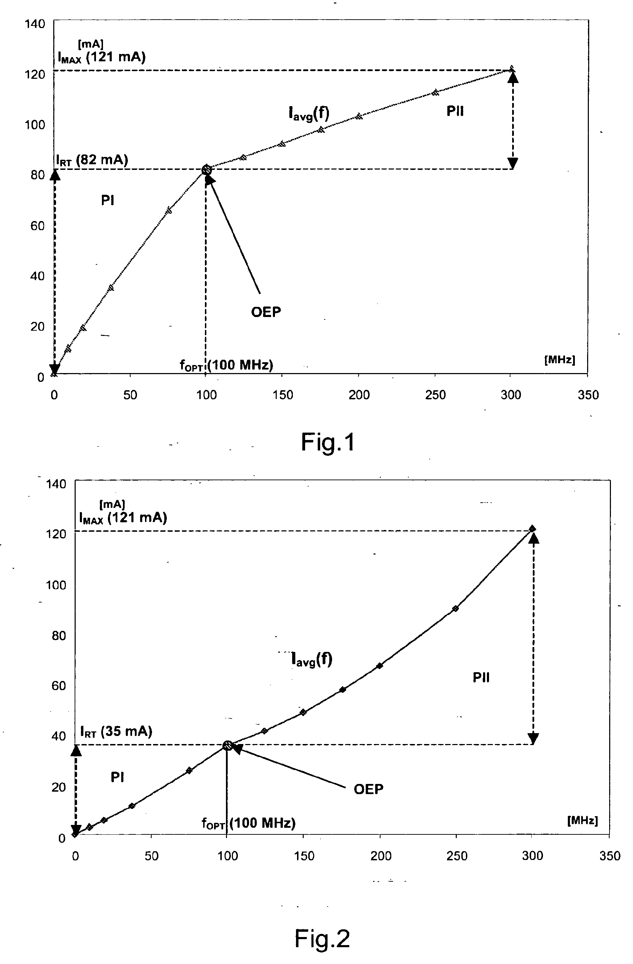

Fig. 1 shows a graph of a current-frequency relation of a processing unit. Merely as an illustrative example, the processor may be a TriMedia 3260 processor from PNX 1500IC from Philips Semiconductors. Here, the energy which is supplied to the processing unit is controlled by a dynamic frequency scaling. In Fig. 1, the relation between the supply current of a hardware block or processing unit or functional unit and the operation frequency of the block is depicted. In particular, the average supply current Iavg (which is supplied to the block) is depicted. From Fig. 1 it can be seen that the average supply current Iavg is linearly proportional to the working frequency of the hardware block. In other words, each particular workload or operating mode of a hardware block will result in a particular supply current. In Fig. 1 an optimal energy point OEP is shown, which corresponds to the situation where the processing unit operates at an optimal energy mode, i.e. an optimal power dissipation mode.

Furthermore, from Fig. 1 it can be seen that the relationship between the operating frequency and the current has two slopes wherein the optimal energy point OEP corresponds to the crossing point of the two slopes. The region PI left to the optimal point OEP corresponds to a region where the amount of energy delivered to the processing unit or the hardware block is less than required by the hardware block. The region PII right to the optimal energy point OEP corresponds to a situation where the energy delivered to the hardware block/processing unit is more than actually required by the hardware block/processing unit.

It should be noted that the current-frequency characteristics will be different for each processor or each hardware block or each functional unit. Typically, the current-frequency characteristics will be such that substantially two lines with two different slopes will be apparent in the current-frequency characteristics, wherein a first line with a first slope will correspond to the region PI1 and wherein a second line with a second slope will correspond to the region PII.

For some processors or hardware blocks, the second upper line, i.e. the region PII, can be flat or horizontal if the hardware block is powered down while it is idle. The first line may have a steep or vertical slope (i.e. the region PI) if the hardware blocks are switched off when they can not fully execute the required functionality. Accordingly, the slope, i.e. the angle of the slope, of the first region PI is typically larger than the slope, i.e. the angle of the slope of the second region PII. Hence, executing functionality is more costly in terms of energy than an idleness.

By detecting the angle of the slope in a current-frequency relationship, it can be determined whether the hardware block is operating at the optimal energy point. Such information may be used for power management.

Accordingly, the present invention shows an easy way to determine the workload and the operating mode/state of a hardware block and to determine whether the hardware block is working at an optimal energy point or not. This can be performed by examining the supply lines of the hardware block.

Fig. 2 shows a further graph of a current-frequency relation of a processing unit. As according to Fig. 1, TriMedia 3260 processor from PNX 1500IC from Philips Semiconductors is used but only for illustrative purpose. It should be noted that also other processors or processing units may be used. Here, the energy which is supplied to the processing unit is controlled according to the dynamic frequency and voltage scaling DVFS, i.e. the supply current and/or the clock frequency is controlled. As in Fig. 1, an optimal energy point OEP is depicted which corresponds to the situation where the processing unit operates at an optimal energy mode, i.e. an optimal power dissipation mode. As in Fig. 1, Fig. 2 shows a relation between the operating frequency and the supply current as two slopes, wherein the optimal energy point OEP corresponds to the crossing points between two slopes. The region PI left to the optimal point OEP corresponds to a region where the amount of energy delivered to the processing unit is less than required by the processing unit. The region PI right to the optimal energy point OEP corresponds to a situation where the energy delivered to the processing unit is more than actually required.

In contrast to the graph of Fig. 1, the relation between the supply current and the operating frequency is not a linear relation. The current which is drawn by the processing unit according to Fig. 2 is less than the current drawn by the processing unit according to Fig. 1 as a dynamic voltage and frequency scaling DVFS is applied. The relation between the current and the frequency is not linear but is square as the frequency as well as the supply voltage may influence the power or energy supplied to the processing unit. On the other hand, it should be noted that the optimal energy point can be found at the same frequency as in the case according to Fig. 1. Therefore, the power management as described in Fig. 1 may also be applied according to Fig. 2.

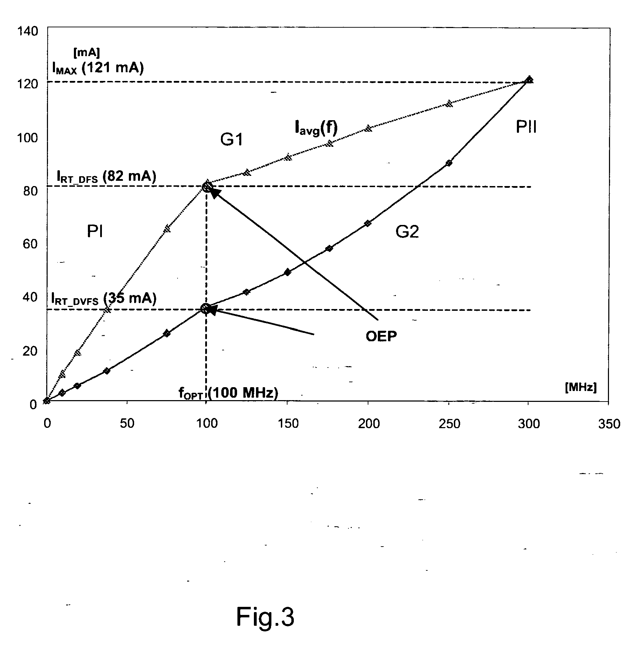

Fig. 3 shows a further graph of a current-frequency relation of a processing unit according to the invention. In Fig. 3, the graphs of Fig. 1 and 2 are both depicted. The upper relation G1 corresponds to the graph of Fig. 1 and the lower relation G2 corresponds to the graph of Fig. 2.

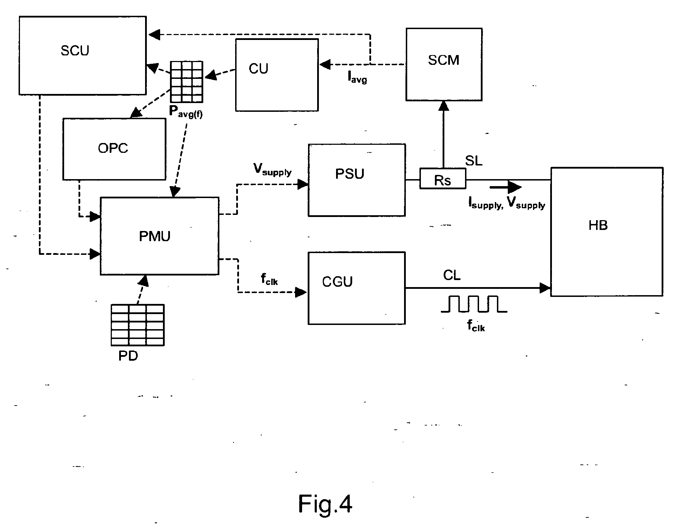

Fig. 4 shows a block diagram of an electronic device according to a first embodiment. The electronic device comprises a power supply unit PSU, a hardware block HB and supply lines SL coupled between the power supply unit PSU and the hardware block HB. The hardware block HB may comprise a microprocessor, a functional unit or a further electronic device which is able to implement different functionalities. The power supply unit PSU, the supply lines SL and the hardware block HB constitute the core of the electronic device.

Furthermore, additional functional units may be provided to implement the basic principle of the current invention. Therefore, a supply current monitor SCM is coupled to the supply lines SL for measuring the current which is supplied to the hardware block HB, i.e. it serves for performing current monitoring, current averaging or averaging time. Therefore, the supply current monitor SCM outputs an average supply current Iavg. Furthermore, a characterization unit CU, a sloped calculation unit SCU, an optimal energy point calculation unit OPC, and a power management unit PMU is provided. The characterization unit CU serves to analyze the average supply current to determine the workload of the hardware block. The input of the characterization unit CU corresponds to the average supply current Iavg. The slope calculation unit SCU is used to determine the slope of the current-frequency relation of the electronic device and/or the hardware block HB. The optimal energy point calculation unit OPC determines whether the monitored average supply current Iavg corresponds to a workload or operating state which corresponds to the optimal energy point OEP or not. The result of the slope calculation in the slope calculation unit SCU and the results of the optimal energy point calculations are output to the power managing unit PMU. The power managing-unit PMU serves to control the power dissipation of the hardware block e. g. by switching off/on parts of the hardware block according to the results of the power management.

In other words, the average supply current Isupply is monitored and analyzed to determine the workload or operating state of the hardware block. The average supply current Iavg is also analyzed to determine whether the hardware block HB is operating at an optimal energy or not. Based on the results of the analysis with respect to the operating state and the optimal energy operation of the hardware block, power management policies can be implemented in order to manage the power dissipation of the hardware block.

In the characterization unit CU a relation between the supply current and the operating frequency is determined. This relation may be determined off-line or online. If the relation is to be determined online, average supply current is measured for several execution frequencies and/or supply voltages. In order to determine the slopes of the relations, the executing frequency and/or the supply voltage can be oscillated in order to measure average supply currents at different points in order to determine the slope of the relation.

The optimal energy point OEP can be determined e.g. by means of the optimal energy point calculation unit OPC. This can for example be performed by oscillating the execution frequency like the clock frequency and/or by oscillating the supply voltage. During these oscillations, the supply current is measured and from these measurements it is determined e.g. in the optimal energy point calculation unit whether two different slopes are present or not. If a dynamic frequency scaling DFS (Fig. 1) is used, the relationship between the supply current and the frequency will be linear while if a dynamic voltage and frequency scaling DVFS is used, the relation will be a square function. However, the square functions can be linearized to facilitate the calculation of the slopes.

- Alternatively or in addition, the function of the average supply current is measured starting from a maximum frequency and reducing the frequency while the supply current is measured. In such a case a patrioal linearization can be present. The slopes of the line segments are decreasing with a decreasing frequency and the slopes of the segments which pass through the optimal frequency fopt raises again and decreases thereafter. If the slopes of the line segments are calculated, the optimal frequency can be determined as in the case of the dynamic voltage and frequency scaling according to Fig. 2. If the slope of the first line segment (counting backwards from the higher frequency) is less than the slope of the next line segment (being the one at a lower frequency), the optimal frequency fopt can be found between the line segments as the slopes decrease when two segments are in the same energy region.

The power management unit PMU can be performed by executing at low power but in real time, by scaling the quality of the executed functionality and/or by executing at an optimal energy point. If the hardware block is executing at low power but in real time, the hardware block is kept in the lower part of the region PI. Thereafter, the operation of the hardware block is observed to determine whether its operation decreases (then increases the voltage and frequency) or whether it goes up (then decreases the frequency and voltage). If the hardware block is operated by scaling the quality of the executed functionality based on the power management, the hardware block is kept in the higher part of the region PI and it is observed whether its operation goes down or goes up. If its operation goes down, then the voltage and frequency must be increased. On the other hand, if its operation goes up, then the frequency and the voltage must be decreased.

If the operation of the hardware block is performed at the optimal energy point, the average current consumption of the hardware block is monitored and the frequency and voltage settings of the hardware block are changed in order to react to changes in the application. This is performed to keep the hardware block as close as possible to the optimal energy point.

The characterization of the hardware block may be performed offline and the results thereof may be stored in a memory. This will speed up the process of determining the state of the hardware block. The current-frequency relation can be stored as a set of analytical formulas, as a table, slope angles or as ranges. During the performance of the power management, the average supply current is measured and can be compared to a stored relationship or model in order to determine the actual state of the hardware block. The power management is performed either to increase or decrease the energy delivered to the hardware block. This can be performed by the frequency and voltage relation.

If a feedback is included, the average supply current is measured, the frequency and voltage settings are changed accordingly and the changes of the frequency and voltage settings will lead to changes in the supply current.

- Therefore, the power management unit PMU is coupled to the power supply unit and the clock generation unit CGU. The power management unit PMU will therefore control the power supply unit PSU such that the power supply unit PSU will output a specific supply voltage. The power management unit PMU will control the clock generation unit CGU such that the clock generation unit CGU will output a clock frequency according to the request of the power management unit PMU.

The above described principles of the present invention can be implemented in any integrated circuit, however especially in those integrated circuits for which a low power dissipation is important. For example, a good example of such integrated circuits which need to be power managed are microprocessors used in mobile phones or other portable devices which operated on batteries.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single unit or other unit may fulfill the functions of several items recited in the claims. The mere fact that certain measures are recited in mutually different dependent claims does not indicate that a combination of these measured cannot be used to advantage.

Any reference signs in the claims should not be construed as limiting the scope.

## Claims

1. Electronic device, comprising:
- at least one functional unit (HB) for performing a processing, wherein the functional unit (HB) receives a supply current (Isupply),
- a supply current monitor (SCM) for monitoring the supply current (Isupply) for the at least one functional unit (HB) to determine an average supply current (Iavg), **characterized by**
- a characterization unit (CU) for determining a relation between the average supply current (Iavg) and an operating frequency of the functional unit,
- a slope calculation unit (SCU) for determining the slope of the relation, and
- a power management unit (PMU) for controlling the operation of the functional unit (HB) according to the results of the slope calculation unit (SCU) in order to control the power dissipation of the functional unit (HB).

2. Electronic device according to claim 1, furthermore comprising:
- an optimal: energy calculation unit (OPC) for determining whether the monitored average supply current (Iavg) corresponds to an operation of the functional block (HB) at an optimal energy point (OEP),
- wherein said optimal energy point corresponds to a point in the curve representing the relation between the average supply current (Iavg) and the operating frequency of the functional unit, said point being situated between a region where the amount of energy delivered to the functional unit is less than required by the functional unit and another region where the amount of energy delivered to the functional unit is more than required by the functional unit;
- wherein the power management unit (PMU) is adapted to control the operation of the functional unit (HB) according to the result of the optimal energy point calculation unit (OTC).

3. Electronic device according to the claim 2, wherein the optimal energy calculation unit (OPC) is adapted to determine the optimal energy point (OEP) by oscillating the supply voltage and/or the operating frequency of the functional unit (HB).

4. Method of performing a power management in an electronic device, comprising the steps of:
- performing a processing by at least one functional unit (HB), wherein the functional unit (HB) receives a supply current (Isupply),
- monitoring the supply current to the at least one functional unit (HB) to determine an average supply current (Iavg),
**characterized by**
- determining a relation between the average supply current (Iavg) and an operating frequency of the functional unit (HB),
- determining a slope of the relation, and
- power managing the operation of the functional unit (HB) according to the results of the slope calculation in order to control the power dissipation of the at least one functional unit (HB).

## Patentansprüche

1. Elektronische Vorrichtung, umfassend:
- zumindest eine Funktionseinheit (HB) zur Durchführung einer Verarbeitung, wobei die Funktionseinheit (HB) einen Versorgungsstrom (Isupply) empfängt;
- einen Versorgungsstrommonitor (SVM) zum Überwachen des Versorgungsstroms (Isupply) für die zumindest eine Funktionseinheit (HB) zum Bestimmen eines durchschnittlichen Versorgungsstroms (Iavg), **gekennzeichnet durch**
- eine Charakterisierungseinheit (CU) zum Bestimmen eines Verhältnisses zwischen dem durchschnittlichen Versorgungsstrom (Iavg) und einer Betriebsfrequenz der Funktionseinheit,
- eine Flankenberechnungseinheit (SCU) zum Bestimmen der Flanke des Verhältnisses, und
- eine Leistungsverwaltungseinheit (PMU) zur Steuerung des Betriebs der Funktionseinheit (HB) entsprechend den Ergebnissen der Flankenberechnungseinheit (SCU) zur Steuerung der Verlustleistung der Funktionseinheit (HB).

2. Elektronische Vorrichtung nach Anspruch 1, des Weiteren umfassend:
- eine Optimalenergieberechnungseinheit (OPC) zum Bestimmen, ob der überwachte durchschnittliche Versorgungsstrom (Iavg) einem Betrieb des Funktionsblocks (HB) bei einem optimalen Energiepunkt (OEP) entspricht,
- wobei der optimale Energiepunkt einem Punkt in der Kurve entspricht, die das Verhältnis zwischen dem durchschnittlichen Versorgungsstrom (Iavg) und der Betriebsfrequenz der Funktionseinheit darstellz, wobei der Punkt zwischen einer Region, in der die an die Funktionseinheit abgegebene Energiemenge kleiner als von der Funktionseinheit erforderlich ist, und einer anderen Region, in der die an die FunkLionseinheit abgegebene Energiemenge größer als von der Funktionseinheit erforderlich ist, liegt;
- wobei die Leistungsverwaltungseinheit (PMU) dazu ausgebildet ist, den Betrieb der Funktionseinheit (IIB) entsprechend den ergebnis der Optimalpunktberechnungseinheit (OTC) zu steuern.

3. Elektronische Vorrichtung nach Anspruch 2, wobei die Optimalpunktberechnungseinheit (OTC) dazu ausgebildet ist, den optimalen Energiepunkt (OEP) durch Oszillieren der Versorgungsspannung und/oder der Betriebsfrequenz der Funktionseinheit (HB) zu bestimmen.

4. Verfahren zum Ausführen einer Leistungsverwaltung in einer elektronischen Vorrichtung, umfassend die folgenden Schritte:
- Durchführen einer Verarbeitung durch zumindest eine Funktionseinheit (HB), wobei die Funktionseinheit (HB) einen Versorgungsstrom (Isupply) empfängt;
- Überwachen des Versorgungsstroms zu der zumindest einen Funktionseinheit (HB) zur Bestimmung eines durchschnittlichen Versorgungsstroms (Iavg),
**gekennzeichnet durch**
- Bestimmen eines Verhältnisses zwischen dem durchschnittlichen Versorgungsstrom (Iavg) und einer Betriebsfrequenz der Funktionseinheit (HB),
- Bestimmen einer Flanke des Verhältnisses, und
- Verwalten der Leistung des Betriebs der Funktionseinheit (HB) entsprechend den Ergebnissen der Flankenberechnungseinheit (SCU) zur Steuerung der Verlustleistung der zumindest einen Funktionseinheit (HB).

## Revendications

1. Dispositif électronique, comprenant :
- au moins une unité fonctionnelle (HB) pour effectuer un traitement, dans lequel l'unité fonctionnelle (HB) reçoit un courant d'alimentation (Isupply),
- un dispositif de contrôle de courant d'alimentation (SCM) pour contrôler le courant d'alimentation (Isupply) pour l'au moins une unité fonctionnelle (HB) pour déterminer un courant d'alimentation moyen (Iavg), **caractérisé par**
- une unité de caractérisation (CU) pour déterminer une relation entre le courant d'alimentation moyen (Iavg) et une fréquence de fonctionnement de l'unité fonctionnelle,
- une unité de calcul de pente (SCU) pour déterminer la pente de la relation, et
- une unité de gestion de puissance (PMU) pour commander le fonctionnement de l'unité fonctionnelle (HB) selon les résultats de l'unité de calcul de pente (SCU) afin de commander la dissipation de puissance de l'unité fonctionnelle (HB).

2. Dispositif électronique selon la revendication 1, comprenant en outre :
- une unité de calcul d'énergie optimale (OPC) pour déterminer si le courant d'alimentation moyen contrôlé (Iavg) correspond à un fonctionnement du bloc fonctionnel (HB) à un point d'énergie optimale (OEP),
- dans lequel ledit point d'énergie optimale correspond à un point dans la courbe représentant la relation entre le courant d'alimentation moyen (Iavg) et la fréquence de fonctionnement de l'unité fonctionnelle, ledit point étant situé entre une région où la quantité d'énergie délivrée à l'unité fonctionnelle est inférieure à celle exigée par l'unité fonctionnelle et une autre région où la quantité d'énergie délivrée à l'unité fonctionnelle est supérieure à celle exigée par l'unité fonctionnelle ;
- dans laquelle l'unité de gestion de puissance (PMU) est conçue pour commander le fonctionnement de l'unité fonctionnelle (HB) selon le résultat de l'unité de calcul de point d'énergie optimale (OTC).

3. Dispositif électronique selon la revendication 2, dans lequel l'unité de calcul d'énergie optimale (OPC) est conçue pour déterminer le point d'énergie optimale (OEP) en faisant osciller la tension d'alimentation et/ou la fréquence de fonctionnement de l'unité fonctionnelle (HB).

4. Procédé consistant à exécuter une gestion de puissance dans un dispositif électronique, comprenant les étapes de :
- exécution d'un traitement par au moins une unité fonctionnelle (HB), dans lequel l'unité fonctionnelle (HB) reçoit un courant d'alimentation (Isupply),
- contrôle du courant d'alimentation vers l'au moins une unité fonctionnelle (HB) pour déterminer un courant d'alimentation moyen (Iavg),
**caractérisé par**
- la détermination d'une relation entre le courant d'alimentation moyen (Iavg) et une fréquence de fonctionnement de l'unité fonctionnelle (HB),
- la détermination d'une pente de la relation, et
- la gestion de puissance du fonctionnement de l'unité fonctionnelle (HB) selon les résultats du calcul de pente afin de commander la dissipation de puissance de l'au moins une unité fonctionnelle (HB).
